# EUROPEAN PATENT APPLICATION

(11) **EP 1 378 983 A2**
(43) Date of publication of application: **07.01.2004**
(21) Application number: 03254194.8
(22) Date of filing: 01.07.2003
(51) Int. Cl.: H02K 5/16

(54) **Fan motor**

(30) Priority: 04.07.2002 JP 2002195748
(71) Applicant: Minebea Co., Ltd., Nagano-Ken 389-0293 (JP)
(72) Inventor: Obara, Rikuro 4106-73 Oaza Mishiroda, Oshiroda, Saku-gun, Nagano-ken (JP); Matsumoto, Kaoru 4106-73 Oaza Mishiroda, Oshiroda, Saku-gun, Nagano-ken (JP)
(74) Representative: Wilson Gunn Gee

(57) **Abstract**

An apparatus to render the shield of a ball bearing unnecessary and to improve the lubricity inside a fan motor (2) is presented. A bearing housing (24) is integrally formed with a base (23) of the fan motor, and a shield part (26) is formed at one end of the bearing housing. A ball bearing (27), spacer (28) and sleeve bearing (29) are set inside from the other end of the bearing housing, and these are fixed in place by pressing in a retainer cap (30). The interior of the bearing housing is then shielded at each end by the shield part (26) and the retainer cap, making the need for a shielded ball bearing unnecessary. A rotational shaft (31), to which a rotor (34) and impeller (38) are attached, is supported by the ball bearing and the sleeve bearing. Inside the bearing housing, lubricating oil passes back and forth between the ball bearing and sleeve bearing, thereby enabling the elimination of insufficiencies in lubricating oil, and improving lubricity.

## Description

The present invention relates to an apparatus for a fan motor used in the cooling of equipment and the like containing electronic parts.

Generally, in electronic equipment such as, for instance, personal computers, servers and copiers containing electronic parts, compact fan motors are installed for the purposes of cooling the interior of the assembly or the individual electronic parts.

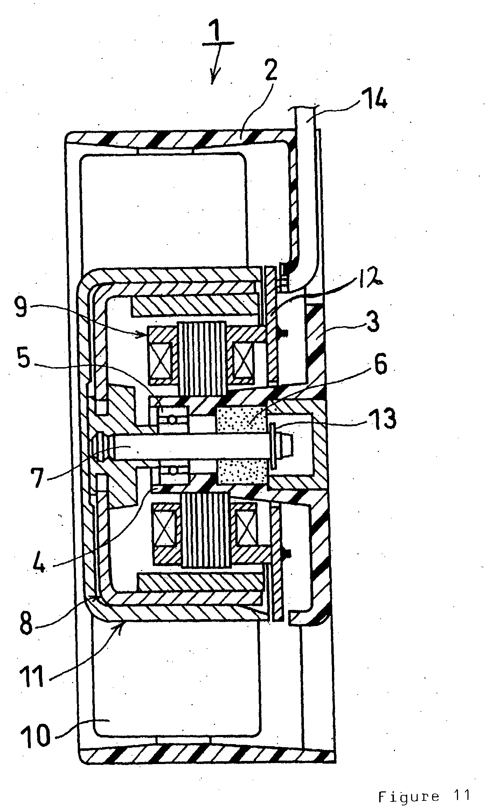

One example of this type of conventional axial flow fan motor that is installed in such equipment and the like is explained with reference to Figure 11. As shown in Figure 11, with regard to fan motor 1, a ball bearing 5 and a sleeve bearing 6 are set inside a cylindrical bearing housing 4 that is integrally formed with base 3 of casing 2 made of synthetic resin, and the shaft 7 is supported by these bearings 5 and 6 so as to be capable of rotating. For the purposes of dust proofing and preventing splashing of lubricating oil, ball bearing 5 is provided with a shield, while the sleeve bearing 6 consists of porous material of sintered metal or the like that is impregnated with lubricating oil.

The rotor 8 of the motor is attached to the tip of shaft 7, and stator 9 of the motor is fixed to the periphery of bearing housing 4 opposite rotor 8. An impeller 11 made of synthetic resin and furnished with multiple fins 10 fits into the outer side of rotor 8. A PC board (print substrate) 12 incorporating a drive circuit that serves to drive the motor is attached to the periphery of the base of bearing housing 4. In the figure, reference numeral 13 is the stop ring that prevents shaft 7 from coming off, and 14 is the lead wire that serves to energize the PC board 12.

As a result of this configuration, when the drive circuit of PC board 12 is energized via lead wire 14, stator 9 generates a magnetic field and causes rotor 8 to rotate, with the result that impeller 11 rotates and air flow occurs in a uniform direction inside casing 2. Consequently, by installing fan motor 1 in the appropriate part of the electronic equipment, it is possible to cool the individual electronic parts or the interior of the assembly of the electronic equipment.

In the aforementioned conventional fan motor 1, however, there are the following problems. Using a ball bearing provided with a shield adds to the manufacturing costs. Further, as the structure is such that ball bearing 5 and sleeve bearing 6 are fit in from both ends of bearing housing 4, and their positions in the axial direction are determined by contact with the central stage part, the fitting part of ball bearing 5 and the fitting part of sleeve bearing 6 of bearing housing 4 are molded by separate metal dies (i.e., an upper die and a lower die). Consequently, it becomes difficult to assure the concentricity of ball bearing 5 and sleeve bearing 6. Moreover, due to the reduced lubricity of sleeve bearing 6, bearing life is limited.

Accordingly, the present invention is directed to the construction and operation of a fan motor that not only makes the ball bearing shield unnecessary, but also achieves a longer life for the ball bearing. The construction of the fan motor is such that it is provided with a cylindrical bearing housing fixed to a base, a pair of bearings set inside the bearing housing, a rotational shaft supported by the pair of bearings, a stator fixed to the outer periphery of the bearing housing, a rotor that faces the stator and that is fixed to the side of the rotational shaft, and an impeller that is fixed to the side of the rotational shaft.

An embodiment of the present invention is characterized by shielding the interior of the bearing housing by forming a shield part at one end of the bearing housing that extends in the radial direction to the vicinity of the rotational shaft, setting the pair of bearings inside the bearing housing from the other end of the bearing housing, and affixing a cap member to the other end of the bearing housing.

As a result of this configuration, the interior of the bearing housing is shielded by the shield part and the cap member. This allows for effective dust-proofing of the interior of the housing and the bearings, prevention of splashing of lubricating oil, and allows for use of a bearing without a shield. Furthermore, as a result of this configuration, the pair of bearings is respectively fixed in place by contacting the shield part and the cap member. One can also easily assure the concentricity of the pair of bearings by means of a structure that has the pair of bearings fit into the interior of the housing from one direction. Moreover, inside the shielded bearing housing, lubricating oil passes back and forth between the pair of bearings.

In yet another embodiment of the present invention, the fan motor is characterized by the fact that the pair of bearings can be either an unshielded ball bearing and a sleeve bearing, or a shielded ball bearing and a sleeve bearing.

As a result of either of these configurations, lubricating oil can pass back and forth between the unshielded/shielded ball bearing and the sleeve bearing.

The present invention, including its features and advantages, will become more apparent from the following detailed description with reference to the accompanying drawings.

Figure 1 is a longitudinal section view of the fan motor according to a first embodiment of the present invention.

Figure 2 is a longitudinal section view of the fan motor according to a second embodiment of the present invention.

Figure 3 is a longitudinal section view of the fan motor according to a third embodiment of the present invention.

Figure 4 is a longitudinal section view of the fan motor according to a fourth embodiment of the present invention.

Figure 5 is a frontal view of the spacer of the fan motor shown in Figure 1.

Figure 6 is a cross-sectional view along line A-A of the spacer shown in Figure 5.

Figure 7 is an enlarged longitudinal section view of the sleeve bearing of the fan motor shown in Figure 1.

Figure 8 is an enlarged longitudinal section view of a modified example of the sleeve bearing of the fan motor shown in Figure 1.

Figure 9 is an enlarged longitudinal section view of the retainer cap of the fan motor shown in Figure 2.

Figure 10 is a frontal view of the retainer cap shown in Figure 9.

Figure 11 is a longitudinal section view of a conventional fan motor according to the prior art.

Below, different embodiments of the present invention are explained with reference to the drawings.

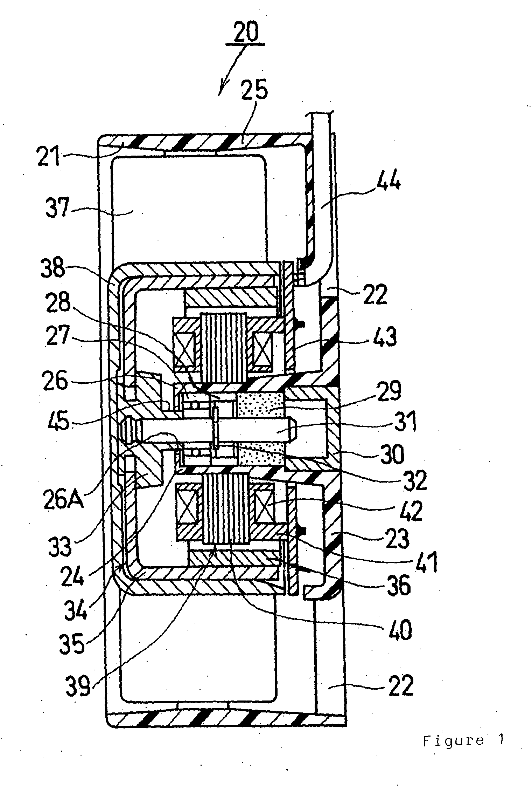

Referring now to Figure 1, a first embodiment of the present invention is described. As shown in the figure, fan motor 20 is provided with a synthetic resin casing 25 having a cylindrical venturi part 21 that has a tapered inner surface, a base 23 that is fixed in place by multiple ribs 22 radially extending at the center of one end of venturi part 21, and a cylindrically-shaped bearing housing 24 that is integrally molded with the bottomed base 23. The bearing housing 24 extends from base 23 into the interior of casing 25 in a manner concentric with venturi part 21.

Formed at one end of bearing housing 24 is a bottom shield part 26 having formed therein an aperture 26A at the center. The shield part 26 extends radially to the vicinity of rotational shaft 31. Into aperture 26A is inserted a cylindrical part 45, formed at a base of hub 33, that is attached to the tip of rotational shaft 31. A sufficiently small clearance gap of 30-50 µm is formed between cylindrical part 45 and aperture 26A.

Inside bearing housing 24, ball bearing 27, that contacts shield part 26, and cylindrical spacer 28, that contacts both ball bearing 27 and sleeve bearing 29, are inserted via an aperture in the side of base 23 and set in place. The bottomed, cylindrically-shaped retainer cap 30 is then pressed into the aperture in the side of base 23 of bearing housing 24, and contacts sleeve bearing 29, fixing in place ball bearing 27, spacer 28, and sleeve bearing 29. Thus, the interior of bearing housing 24 is shielded from the exterior at each respective end by shield part 26 and retainer cap 30.

As ball bearing 27, one may use an unshielded ball bearing that is not provided with a shield.

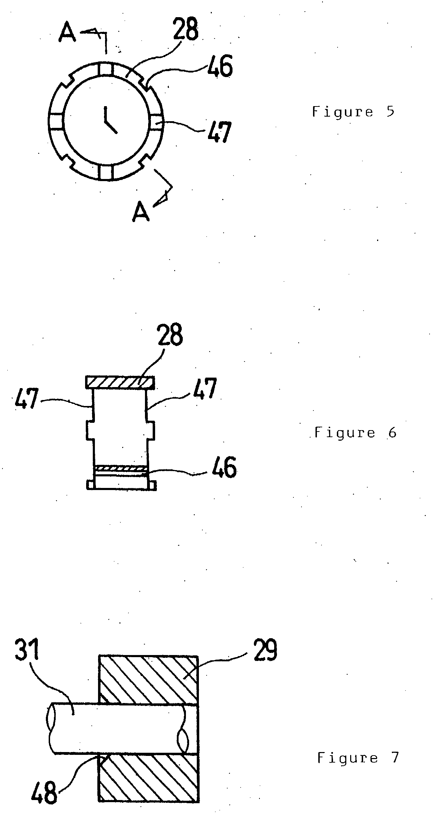

On spacer 28, as shown in Figures 5 and 6, multiple oil grooves 46 are provided in the axial direction on the outer periphery (four are illustrated in the figures), and multiple oil grooves 47 are respectively formed in the radial direction on both end faces (four are illustrated in the figures). It is to be understood, of course, that more or less oil grooves may be used depending on specifications.

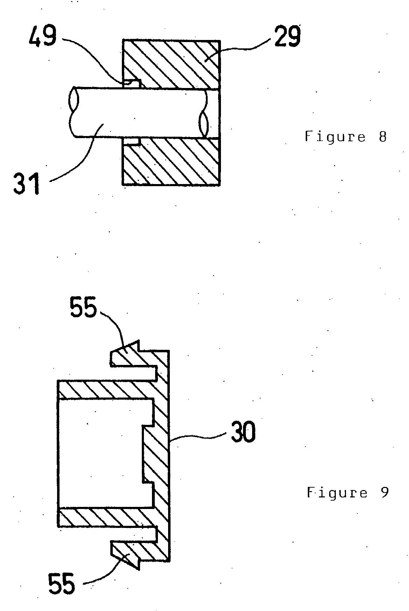

The sleeve bearing 29 consists of porous material made of sintered metal or the like, and is impregnated with lubricating oil. Preferably, the end of sleeve bearing 29 on the retainer cap 30 side is sealed, or the density of the sintering may be raised so that the lubricating oil that impregnates sleeve bearing 29 does not flow out to retainer cap 30 side. As shown in Figures 7 and 8, a chamfer 48 or a stage 49 can be formed on an edge of sleeve bearing 29 aperture on the ball bearing 27 side that allows for easy insertion of rotational shaft 31. Moreover, as it is possible to collect lubricating oil in chamfer 48 or stage 49, it is possible to supply sufficient lubricating oil to the sliding surfaces of sleeve bearing 29 and rotational shaft 31. The compatibility of the lubricating oils used in ball bearing 27 and sleeve bearing 29 has been taken into account so that they can be mixed and used.

The rotational shaft 31 is inserted through ball bearing 27 and sleeve bearing 29, and is supported thereby so that it is capable of rotating. A stop ring 32 is attached to rotational shaft 31, and rotational shaft 31 is locked in place by the contact of stop ring 32 with ball bearing 27. A hub 33, made of zinc die cast, is attached to the tip of rotational shaft 31, and additionally a rotor 34 is attached to hub 33.

The rotor 34 covers bearing housing 24 and consists of a bottomed, cylindrically-shaped yoke 35, whose bottom part is attached to hub 33, and an annular permanent magnet 36 fixed to the inner periphery of yoke 35. An impeller 38 possessing multiple fins 37 is press-fitted into the outer periphery of yoke 35. Instead of providing a separate hub 33, it is also acceptable to directly insert rotational shaft 31 into an impeller 38 made of synthetic resin that is integrated with the hub.

A stator 39 that faces the inner periphery of rotor 34 is attached to the outer periphery of bearing housing 24. The stator 39 consists of a core 40 that radially extends facing the inner periphery of permanent magnet 36 of the rotor 34 side, a bobbin 41 mounted on core 40, a coil 42 that is wound around bobbin 41, and a PC board 43 that is fixed to bobbin 41 and that is arranged at the periphery of the base of bearing housing 24. The central part in the axial direction of permanent magnet 36 is offset to the side of base 23 relative to the central part in the axial direction of core 40.

The brushless DC motor consists of rotor 34 and stator 39, and a drive circuit is provided in PC board 43 for purposes of driving the pertinent brushless DC motor. A lead wire 44 is connected to PC board 43 in order to energize the drive circuit. The lead wire 44 is arranged so as to pass along one of the ribs 22, and extends to the exterior of casing 25.

Next, the operation of the fan motor with the above configuration is explained.

By energizing lead wire 44, the drive circuit mounted in PC board 43 controls the current that flows to coil 42, sequentially magnetizes core 40, and rotates rotor 34 in a uniform direction. As a result of this, impeller 38 is rotated in a uniform direction, and it is possible to blow air in a uniform direction corresponding to its rotation. At this time, as the central part in the axial direction of permanent magnet 36 of rotor 34 is offset to the side of base 23 relative to the central part in the axial direction of core 40 of the stator 39, rotor 34 is attracted in the direction away from base 23 by the magnetic field generated by stator 39, and as a result of the force in the axial direction induced by this it is possible to preload ball bearing 27.

As it is possible to prevent the invasion of foreign matter, dust and the like, and prevent the splashing of the lubricating oil of ball bearing 27 by shielding the interior of bearing housing 24 from the exterior by shield part 26 and retainer cap 30, it is unnecessary to have an expensive shielded ball bearing, and one can reduce the manufacturing cost. By forming a stage (not shown) on cylindrical part 45 of hub 33 that is attached to shield part 26 and rotational shaft 31, and by forming their clearance gap in a labyrinthine shape, it is possible to heighten the dust-proofing effect and the leakage prevention effect for the lubricating oil. Moreover, in expectation of a still more heightened shielding effect, one can also use a shielded ball bearing as ball bearing 27.

As lubricating oil reciprocally passes between ball bearing 27 and sleeve bearing 29 via oil grooves 46, 47 of spacer 28 inside shielded bearing housing 26, any insufficiency of lubricating oil can be eliminated, and thus a longer life for ball bearing 27 and sleeve bearing 29 can be brought about. By sealing the end part of sleeve bearing 29 on the retainer cap 30 side, or by raising the sintering density of the sleeve bearing 29, outflow of the lubricating oil that impregnates the sleeve bearing 29 towards the retainer cap 30 can be prevented and thus the amount of lubricating oil consumed can be reduced.

As bearing housing 24 is configured so that ball bearing 27 and sleeve bearing 29 are inserted and set from the aperture in the side of base 23, their fitting parts can be molded/cast from one metal die (i.e., without the need for an upper die and a lower die) without occurrence of undercutting. Consequently, it is possible to easily assure the concentricity of ball bearing 27 and sleeve bearing 29.

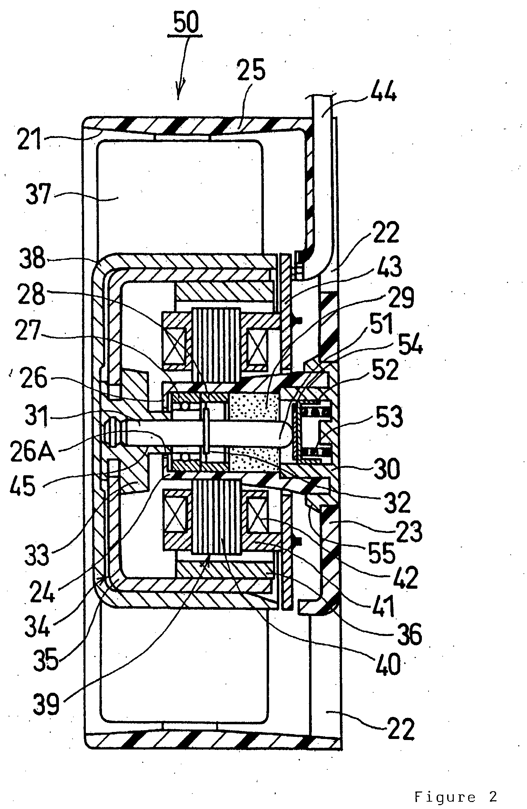

Referring now to Figure 2, a second embodiment of the present invention is described. As the second embodiment has largely the same configuration as the above-described first embodiment, except that it is provided with a spring-action preloading mechanism for the ball bearing, the parts that are identical to those in the first embodiment are hereinafter given the same reference numerals and a detailed explanation is given only for the parts that are different.

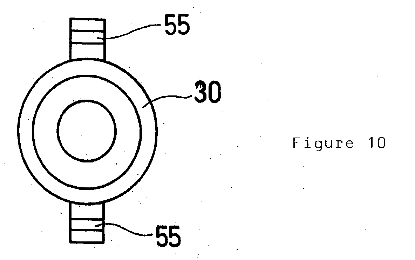

As shown in Figure 2, in the fan motor 50 pertaining to the second embodiment, rotational shaft 31, towards the base 23, is formed as a spherically-shaped surface part 51 and a slide member 52 is installed so as to be able to slide inside retainer cap 30 and to contact this spherical part 51. By means of the spring force of coil spring 53 that is interposed between slide member 52 and retainer cap 30, rotational shaft 31 is pressed in the direction away from base 23, and ball bearing 27 is preloaded. At the point of contact of slide member 52 with rotational shaft 31, a slipper 54 made of synthetic resin is provided in order to alleviate friction. Moreover, as retainer cap 30 also serves the additional function of receiving the spring action of coil spring 53, as shown in Figure 9 and Figure 10, engagement claws 55 are formed at both ends of retainer cap 30 in the radial direction. The engagement claws 55 engage by snapping onto base 23, and in addition to securing ball bearing 27, spacer 28 and sleeve bearing 29, they support the spring force of coil spring 53.

As a result of this configuration, in addition to the operations and effects of the above-described first embodiment, it is possible to regularly preload rotational shaft 31 in the axial direction by means of coil spring 53, with the result that one can minimize the movement of the rotating parts in the axial direction, and lengthen bearing life.

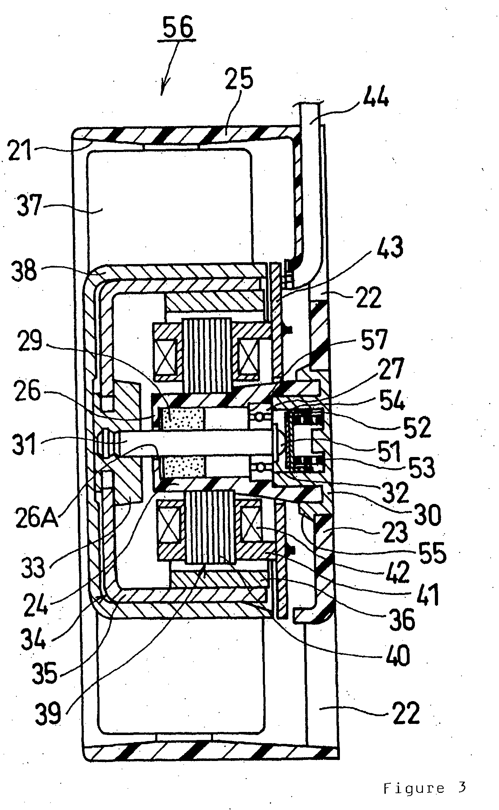

Referring now to Figure 3, a third embodiment of the present invention is described. As the third embodiment has largely the same configuration as the above-described first and second embodiments, except that the ball bearing and sleeve bearing are arranged in the opposite manner with omission of the spacer, the parts that are identical to those of the above-described embodiments are hereinafter given the same reference numerals and a detailed explanation is given only for the parts that are different.

As shown in Figure 3, in the fan motor 56 pertaining to the third embodiment, sleeve bearing 29 is press-fitted into bearing housing 24 and contacts shield part 26. The ball bearing 27 fits into the somewhat larger diameter aperture side of the bearing housing and is fixed in place as one end contacts stage 57 while the other end contacts retainer cap 30. In rotational shaft 31, a stop-ring 32 is attached to the base of spherical part 51, and contacts ball bearing 27. Moreover, there is no cylindrical part 45 formed in hub 33, and shield part 26 of bearing housing 24 and rotational shaft 31 directly face each other with a specified clearance of 30-50µm.

As a result of this configuration, it is possible to omit spacer 28. In this case, similar to the above-described first and second embodiments, the discharge to the outside of the lubricating oil that impregnates the sleeve bearing 29 can be impeded by sealing the end face of sleeve bearing 29 that is on the side opposite ball bearing 27, that is, the shield part 26 side, or by increasing the density of the sintering, and thus the amount of lubricating oil consumed can be reduced.

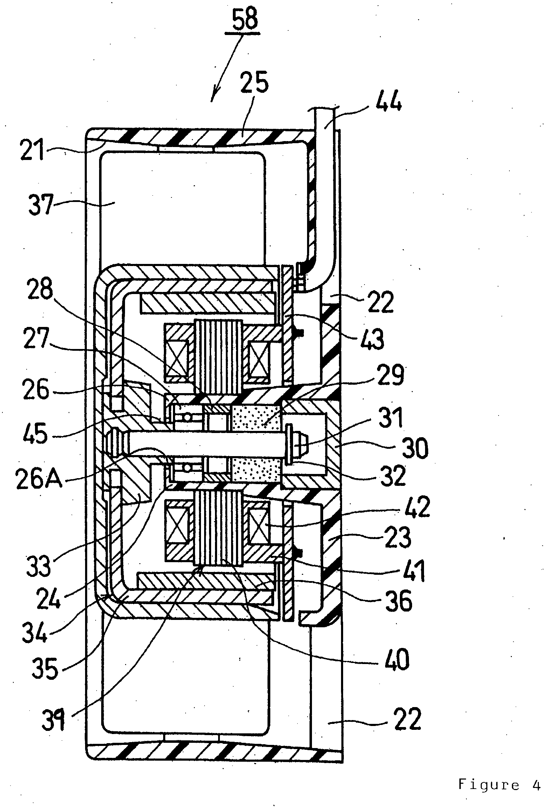

Referring now to Figure 4, a fourth embodiment of the present invention is described. As the fourth embodiment has largely the same configuration as the above-described first embodiment, except that the direction of the preloading due to the magnetic field of the stator is reversed and the attachment positions of the permanent magnet of the rotor and stop-ring of the shaft are different, the parts that are identical to those of the above-described first embodiment are hereinafter given the same reference numerals and a detailed explanation is given only for the parts that are different.

As shown in Figure 4, in the fan motor 58 pertaining to the fourth embodiment, the permanent magnet 36 of rotor 34 extends in the axial direction to the vicinity of the bottom part of yoke 35, and its central part in the axial direction is offset to the opposite side of base 23 relative to the central part in the axial direction of the stator 39.

As a result of this configuration, rotor 34 is attracted towards base 23 by the magnetic field generated by stator 39, and it is possible to preload ball bearing 27 by this force in the axial direction.

In the above-described embodiments, the description concerns a configuration that uses a ball bearing and a sleeve bearing as a pair of bearings, however, it is to be understood that this invention is not limited thereto, and that it is possible to have both be ball bearings or sleeve bearings, and/or to use other suitable types of bearings. Moreover, the present invention is described in the context of a fan motor, however, it is also to be understood that the present invention is not limited thereto, and can be similarly applied to blowers with larger pressure ratios than fan motors. Lastly, it is to be understood that in addition to its essential meaning, the term "fan motor" employed in this specification shall also be taken to include those blowers with larger pressure ratios.

With the fan motor as described above, as the interior of the bearing housing is shielded by the shield part and the cap member, dust-proofing of the housing interior and bearings can be effectively achieved and splashing of lubricating oil can be prevented without using a bearing provided with a shield. As a result, it is unnecessary to have an expensive shielded ball bearing and the manufacturing costs can be reduced.

Furthermore, as the configuration of the fan motor is such that the pair of bearings can be set inside the bearing house from one side, it is possible to mold the bearing fitting parts of the bearing housing from one metal die, and thus the concentricity of the pair of bearings can be easily assured.

Moreover, as lubricating oil passes back and forth between the pair of bearings inside the bearing housing that has been shielded, insufficiencies in lubricating oil can be eliminated and a longer life for the bearings can be achieved.

And yet further with the fan motor described above, by furnishing the bearing housing with a shield part and a retainer cap, the pair of bearings can be retained in place in the bearing housing by contact with the shield part and the retainer cap.

In the foregoing description, the apparatus and method of the present invention have been described with reference to specific examples. It is to be understood and expected that variations in the principles of the apparatus and method herein disclosed may be made by one skilled in the art and it is intended that such modifications, changes, and substitutions are to be included within the scope of the present invention as set forth in the appended claims. The specification and drawings are accordingly to be regarded in an illustrative rather than in a restrictive sense.

## Claims

1. An apparatus for a fan motor comprising:
a base;
a cylindrically-shaped bearing housing integrally formed from the base;
a pair of bearings set in an interior of the bearing housing;
a rotational shaft supported by the pair of bearings;
a shield part integrally formed on the bearing housing at an end opposite the base and which extends in a radial direction towards the rotational shaft; and
a retainer cap set through an aperture in the base.

2. The apparatus according to claim 1, further comprising:
a stator fixed to an outer periphery of the bearing housing;
a rotor fixed to the rotational shaft and positioned to face the stator; and
an impeller fixed to the rotational shaft.

3. The apparatus according to claim 1 or 2, further comprising:
a spacer, cylindrically shaped, set in the interior of the bearing housing between the pair of bearings.

4. The apparatus according to claim 3, wherein the spacer further comprises at least one oil groove.

5. The apparatus according to any preceding claim, further comprising:
a coil spring interposed between the rotational shaft and the retainer cap.

6. The apparatus according to any preceding claim, wherein the retainer cap further comprises:
at least one engagement claw for snapping onto the base.

7. The apparatus according to claim 5 or 6, further comprising:
a slide member interposed between the coil spring and the rotational shaft.

8. The apparatus according to any preceding claim, wherein an end of the rotational shaft towards the base is spherically shaped.

9. The apparatus according to any preceding claim, further comprising:
a hub, to which the rotational shaft is attached, having a cylindrical part which is inserted into an aperture in the shield part,
wherein a clearance gap between the cylindrical part and the shield part is in a labryinthine shape.

10. The apparatus according to any preceding claim, wherein the interior of the bearing housing is shielded by the shield part and the retainer cap.

11. The apparatus according to any preceding claim, wherein the pair of bearings are retained in the bearing housing by contact with the shield part and retainer cap.

12. The apparatus according to any preceding claim, wherein one bearing of the pair of bearings is one of either a shielded ball bearing and an unshielded ball bearing.

13. The apparatus according to any preceding claim, wherein one bearing of the pair of bearings is a sleeve bearing.

14. The apparatus according to claim 13, wherein the sleeve bearing further comprises:
one of a chamfer or a stage formed on an edge of the sleeve bearing.

15. The apparatus according to any of claims 2 to 14, further comprising:
a magnet of the rotor having a central part offset from a central part of a core of the stator,
wherein the rotor is attracted in a direction away from the base.

16. The apparatus according to any of claims 2 to 14, further comprising:
a magnet of the rotor having a central part offset from a central part of a core of the stator,
wherein the rotor is attracted in a direction towards the base.

17. An apparatus for a fan motor, comprising:
a bearing housing, having a hollow interior and a first and a second open end;
a shield part integrally formed on the first end of the bearing housing and which extends towards the interior of the bearing housing; and
a retainer cap that fits onto the second end of the bearing housing,
wherein the interior of the bearing housing is thus shielded by the shield part and the retainer cap.

18. The apparatus according to claim 17, further comprising:
at least one bearing set in the interior of the bearing housing,
wherein the at least one bearing is retained in the bearing housing by contact with at least one of the shield part and the retainer cap.

19. The apparatus according to claim 17 or 18, further comprising:
a base, from which the bearing housing is integrally formed.

20. The apparatus according to any of claims 17 to 19, further comprising:
a rotational shaft, supported by the at least one bearing;
a stator fixed to the an outer periphery of the bearing housing;
a rotor fixed to the rotational shaft and positioned to face the stator; and
an impeller fixed to the rotational shaft.
